# EUROPEAN PATENT APPLICATION

(11) **EP 4 119 416 A1**
(43) Date of publication of application: **18.01.2023**
(21) Application number: 20924884.8
(22) Date of filing: 10.03.2020
(51) Int. Cl.: B61L 3/02

(54) **TRAIN CONTROL SYSTEM**

(71) Applicant: Mitsubishi Electric Corporation, Tokyo 100-8310 (JP)
(72) Inventor: OKAMURA Kazuhiro, Tokyo 100-8310 (JP)
(74) Representative: Sajda, Wolf E.
(86) International application number: PCT/JP2020/010143
(87) International publication number: WO 2021/181495

(57) **Abstract**

An object of the present invention is to provide a train control system capable of suppressing an electrical power consumption. A train control system according to the present invention is a train control system including: a ground wireless apparatus disposed along a railway line of or a railway track; an on-vehicle wireless apparatus disposed in a train traveling along the railway track and connected to the ground wireless apparatus to achieve wireless communication; and a ground apparatus communicably connected to the ground wireless apparatus, wherein the ground apparatus calculates a handover destination list indicating whether or not the ground wireless apparatus is to be a connection destination for wireless communication with the on-vehicle wireless apparatus in a future based on route information and positional information of the train, and the ground wireless apparatus suspends a power source of a transmitter and a receiver used for the wireless communication with the on-vehicle wireless apparatus when the handover destination list does not include the ground wireless apparatus.

## Description

### Technical Field

The present invention relates to a train control system including a ground wireless apparatus disposed along a railway line of a railway track, an on-vehicle wireless apparatus disposed in a train traveling along the railway track and connected to the ground wireless apparatus to achieve wireless communication, and a ground apparatus communicably connected to the ground wireless apparatus.

### Background Art

Conventionally known is a train control system in which a ground wireless apparatus and an on-vehicle wireless apparatus perform wireless communication (for example, refer to Patent Document 1).

### Prior Art Documents

### Patent Documents

[Patent Document 1] International Publication No. WO 2016/132741 A1

### Non-Patent Documents

[Non-patent Document 1] JIS E 3801-1, "Train control system using radio communication- Part 1: General requirement and functional requirements", Japan Industrial Standard

### Summary

### Problem to be Solved by the Invention

In a train control system, an on-vehicle wireless apparatus calculates positional information of a train, and transmits the positional information to a ground apparatus via a ground wireless apparatus. The ground apparatus transmits positional information of a preceding train to a subsequent train. The subsequent train calculates an operational speed of the subsequent train based on the positional information of the preceding train received from the ground apparatus and travels.

The ground wireless apparatus has a limited range of an electrical wave outputted from the ground wireless apparatus, thus is disposed at intervals along a railway track. In a communication based train control (CBTC), the ground wireless apparatus is disposed at intervals of several hundred meters. An uninterruptible power source device, for example, generally backs up a power source of the ground wireless apparatus, however, a large number of ground wireless apparatuses are disposed, thus a problem arises in a power source capacitance of the ground wireless apparatuses. Accordingly, an electrical power consumption of the ground wireless apparatus needs to be suppressed. The ground wireless apparatus is disposed outside, thus may have a form of closed body in many cases. In this case, heat of a built-in unit of the ground wireless apparatus is hardly radiated, thus an electrical power consumption of the built-in unit needs to be suppressed.

In Patent Document 1, a base station (corresponding to the ground wireless apparatus) suspends an operation of transmitting a signal when there is no mobile station (corresponding to the on-vehicle wireless apparatus) around the base station, thereby suppressing an electrical power consumption. In the meanwhile, the base station receives a signal which a mobile station trans mits to the other base station, thereby monitoring whether or not there is a mobile station around the base station, thus cannot suspend an operation of receiving the signal.

As described above, a conventional train control system has room for improvement in suppressing an electrical power consumption of a whole system.

The present invention is therefore has been made to solve such a problem, and it is an object to provide a train control system capable of suppressing an electrical power consumption.

### Means to Solve the Problem

In order to solve the above problem, a train control system according to the present invention is a train control system including: a ground wireless apparatus disposed along a railway line of a railway track; an on-vehicle wireless apparatus disposed in a train traveling along the railway track and connected to the ground wireless apparatus to achieve wireless communication; and a ground apparatus communicably connected to the ground wireless apparatus, wherein the ground apparatus calculates a handover destination list indicating whether or not the ground wireless apparatus is to be a connection destination for wireless communication with the on-vehicle wireless apparatus in a future based on route information and positional information of the train, and the ground wireless apparatus suspends a power source of a transmitter and a receiver used for the wireless communication with the on-vehicle wireless apparatus when the handover destination list does not include the ground wireless apparatus.

### Effects of the Invention

According to the present invention, in the train control system, the ground apparatus calculates a handover destination list indicating whether or not the ground wireless apparatus is to be a connection destination for wireless communication with the on-vehicle wireless apparatus in a future based on route information and positional information of the train, and the ground wireless apparatus suspends a power source of a transmitter and a receiver used for the wireless communication with the on-vehicle wireless apparatus when the handover destination list does not include the ground wireless apparatus, thus an electrical power consumption of the whole train control system can be suppressed.

These and other objects, features, aspects and advantages of the present invention will become more apparent from the following detailed description when taken in conjunction with the accompanying drawings.

### Brief Description of Drawings

FIG. 1 A diagram illustrating an example of a configuration of a train control system according to an Embodiment 1.
FIG. 2 A block diagram illustrating an example of a configuration of a ground apparatus according to the Embodiment 1.
FIG. 3 A diagram for explaining a calculation of a handover destination list according to the Embodiment 1.
FIG. 4 A diagram illustrating an example of the handover destination list according to the Embodiment 1.
FIG. 5 A flow chart illustrating an example of an operation of the train control system according to the Embodiment 1.
FIG. 6 A flow chart illustrating an example of an operation of a train control system according to an Embodiment 2.

### Description of Embodiments

### Embodiment 1

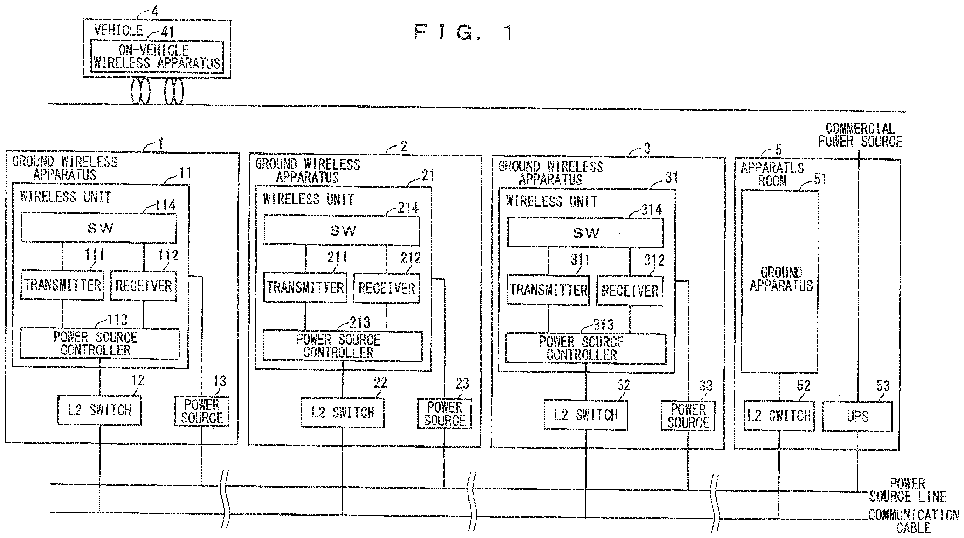

FIG. 1 is a diagram illustrating an example of a configuration of a train control system according to the present Embodiment 1. As illustrated in FIG. 1, the train control system includes ground wireless apparatuses 1, 2, and 3 disposed along a railway line of a railway track, an on-vehicle wireless apparatus 41 disposed in a vehicle 4 as a train traveling along the railway track, and a ground apparatus 51 communicably connected to the ground wireless apparatuses 1, 2, and 3.

The ground wireless apparatus 1 includes a wireless unit 11, an L2 switch 12, and a power source 13. The wireless unit 11 includes a transmitter 111, a receiver 112, a power source controller 113, and an SW 114. The transmitter 111 transmits information to the on-vehicle wireless apparatus 41 by wireless communication. The receiver 112 receives information from the on-vehicle wireless apparatus 41 by wireless communication.

The power source controller 113 individually performs power source control of the transmitter 111 and the receiver 112. Herein, the power source control indicates control of ON or OFF of an electrical power supplied from the power source 13 to each of the transmitter 111 and the receiver 112. The SW 114 is a switch switching an operation of the transmitter 111 or the receiver 112. The L2 switch 12 is connected to an L2 switch 52 disposed in an apparatus room 5 via a communication cable. The power source 13 supplies an electrical power to the transmitter 111 and the receiver 112. The power source 13 is connected to an uninterruptible power supply (UPS) 53 via a power source line.

In the present Embodiment 1, the ground wireless apparatuses 1, 2, and 3 include transmitters 111, 211, and 311 and receivers 112, 212, and 312, respectively, but may also have a redundant configuration including a plurality of transmitters and receivers. In this case, the power source controller 113 individually performs power source control of all of the transmitters and the receivers.

Each of the transmitters 111, 211, and 311 and the receivers 112, 212, and 312 may have a configuration including a modulation circuit and a demodulation circuit in addition to a wireless circuit.

The apparatus room 5 includes the ground apparatus 51, the L2 switch 52, and the UPS 53. The L2 switch 52 is connected to L2 switches 12, 22, and 32 disposed in ground wireless apparatuses 1, 2, and 3, respectively, via a communication cable. The UPS 53 is connected to power sources 13, 23, and 33 disposed in the ground wireless apparatuses 1, 2, and 3, respectively, via a power source line.

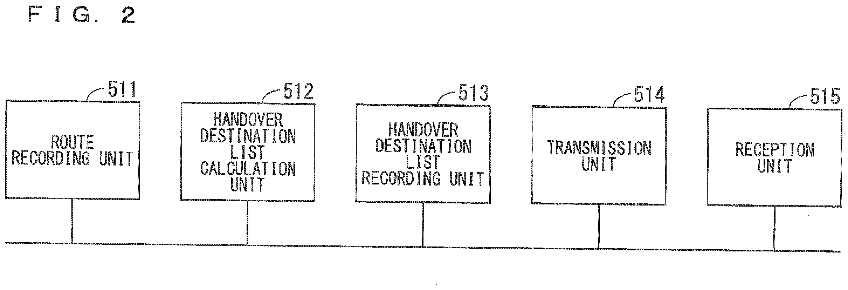

FIG. 2 is a block diagram illustrating an example of a configuration of the ground apparatus 51. As illustrated in FIG. 2, the ground apparatus 51 includes a route recording unit 511, a handover destination list calculation unit 512, a handover destination list recording unit 513, a transmission unit 514, and a reception unit 515.

The route recording unit 511 records route information of the vehicle 4. The handover destination list calculation unit 512 calculates a handover destination list of the on-vehicle wireless apparatus 41. The handover destination list recording unit 513 records the handover destination list calculated by the handover destination list calculation unit 512.

The transmission unit 514 transmits information such as the handover destination list to the ground wireless apparatuses 1, 2, and 3 via a communication cable. The reception unit 515 receives information from the ground wireless apparatuses 1, 2, and 3 via a communication cable. When there are the plurality of vehicles 4, the route recording unit 511 records route information of each vehicle 4, and the handover destination list calculation unit 512 calculates a handover destination list for each on-vehicle wireless apparatus 41 of each vehicle 4.

Described herein is a handover destination list calculated by the handover destination list calculation unit 512.

The on-vehicle wireless apparatus 41 needs to continue wireless communication with the ground wireless apparatus most appropriate for a traveling position of the vehicle 4 to smoothly perform train control. Accordingly, the on-vehicle wireless apparatus 41 needs to perform handover from the ground wireless apparatus currently performing the wireless communication to the ground wireless apparatus subsequently performing the wireless communication in accordance with a change of the traveling position of the train.

The on-vehicle wireless apparatus 41 periodically calculates current positional information (also simply referred to as "positional information" hereinafter) of the vehicle 4 from a current travel speed and current route information of the vehicle 4. The on-vehicle wireless apparatus 41 may obtain the positional information of the vehicle 4 from a global positioning system (GPS) satellite.

Then, the on-vehicle wireless apparatus 41 transmits the positional information of the vehicle 4 to the ground apparatus 51 via the ground wireless apparatus currently performing the wireless communication.

In the ground apparatus 51, when the reception unit 515 receives the positional information of the vehicle 4 from the on-vehicle wireless apparatus 41, the handover destination list calculation unit 512 calculates the handover destination list including the ground wireless apparatus to be a communication connection destination in a future (for example, the subsequent two ground wireless apparatuses) of the on-vehicle wireless apparatus 41 based on the positional information of the vehicle 4 and the route information of the vehicle 4 previously recorded in the route recording unit 511.

The handover destination list calculated by the handover destination list calculation unit 512 is recorded in the handover destination list recording unit 513.

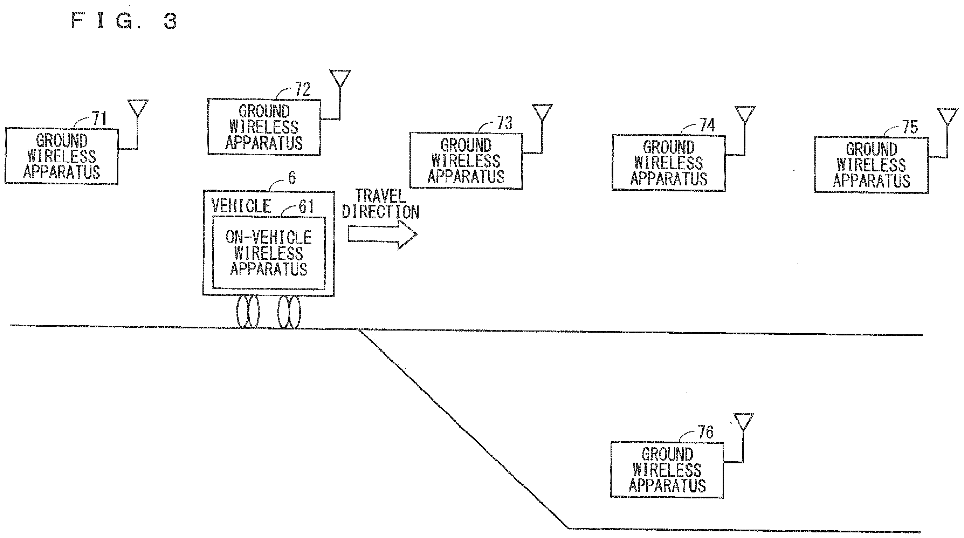

For example, as illustrated in FIG. 3, it is assumed that an on-vehicle wireless apparatus 61 disposed in a vehicle 6 performs wireless communication with a ground wireless apparatus 72, and the vehicle 6 travels along a railway track where the ground wireless apparatuses 73, 74, and 75 are disposed along a railway line in accordance with a predetermined route. In this case, the handover destination list calculation unit 512 calculates the handover destination list including the ground wireless apparatuses 73 and 74 to be the communication connection destination in a future of the on-vehicle wireless apparatus 61 based on the route information and the positional information of the vehicle 6.

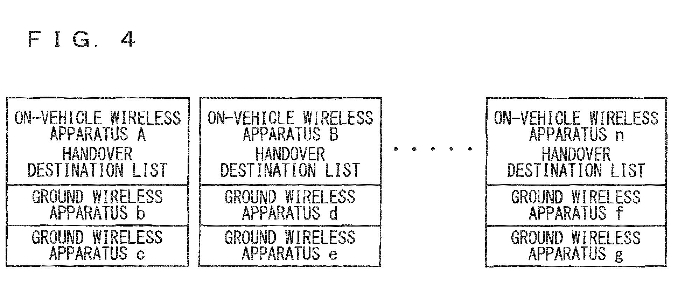

FIG. 4 is a diagram illustrating an example of the handover destination list. As illustrated in FIG. 4, the handover destination list calculation unit 512 calculates a handover destination list for each on-vehicle wireless apparatus. The example in FIG. 4 indicates a case where the handover destination list calculation unit 512 calculates the handover destination list including two ground wireless apparatuses, however, the configuration of the handover destination list calculation unit 512 is not limited thereto.

The handover destination list calculation unit 512 may calculate a handover destination list including one or three or more ground wireless apparatuses.

The transmission unit 514 of the ground apparatus 51 transmits the handover destination list calculated by the handover destination list calculation unit 512 to each of the ground wireless apparatuses 1, 2, and 3 via the communication cable. The power source controller 113 of the ground wireless apparatus 1 suspends the power source of the transmitter 111 and the receiver 112 when the handover destination list does not include the ground wireless apparatus 1 as an own station.

Accordingly, the operations of the transmitter 111 and the receiver 112 are suspended. The other ground wireless apparatuses 2 and 3 perform operations similar to the ground wireless apparatus 1.

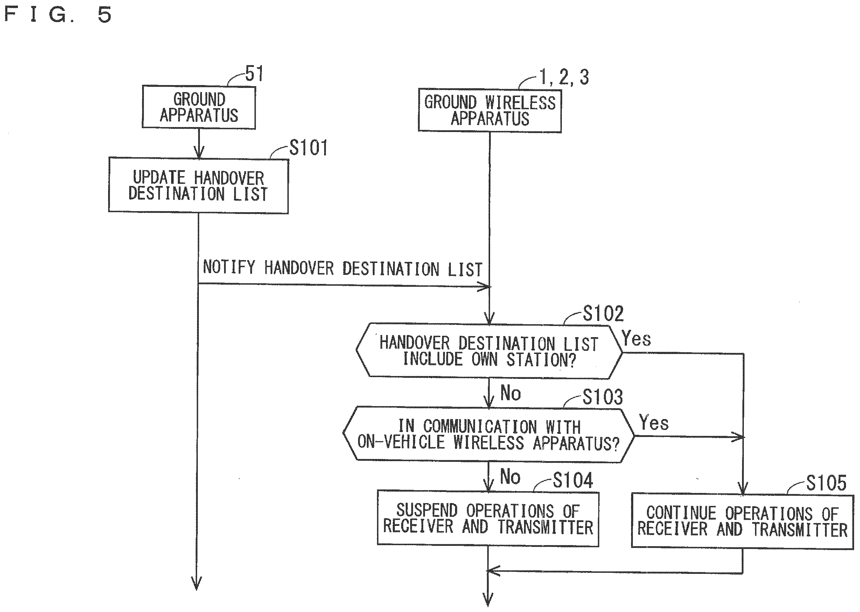

FIG. 5 is a flow chart illustrating an example of an operation of a train control system. The operation of the ground wireless apparatus 1 is described hereinafter, however, the same applies to the operations of the other ground wireless apparatuses 2 and 3.

In Step S101, the handover destination list calculation unit 512 of the ground apparatus 51 updates a handover destination list recorded in the handover destination list recording unit 513. Specifically, the handover destination list calculation unit 512 calculates a handover destination list as described above.

Then, the handover destination list calculation unit 512 updates a handover destination list recorded in the handover destination list recording unit 513 to a newly calculated handover destination list.

Accordingly, a latest handover destination list is recorded in the handover destination list recording unit 513. Subsequently, the ground apparatus 51 transmits all of the handover destination lists to each ground wireless apparatus including the ground wireless apparatus 1 via the communication cable.

The handover destination list may be updated at a timing when the ground apparatus 51 receives the positional information from the on-vehicle wireless apparatus 41. In this case, processing of Step S102 to Step S105 described hereinafter is performed repeatedly every time the ground apparatus 51 receives the positional information from the on-vehicle wireless apparatus 41.

In the present Embodiment 1, one-car train is described as illustrated in FIG. 1, however, when there are a plurality of trains, the handover destination list is calculated for each on-vehicle wireless apparatus included in each train and is updated.

In Step S102, the ground wireless apparatus 1 determines whether or not the handover destination list received from the ground apparatus 51 includes the own station. When the handover destination list does not include the own station, the process proceeds to Step S103. In the meanwhile, when the handover destination list includes the own station, the process proceeds to Step S105.

In Step S103, the ground wireless apparatus 1 determines whether or not the ground wireless apparatus 1 is in communication with the on-vehicle wireless apparatus 41. When the ground wireless apparatus 1 is not in communication with the on-vehicle wireless apparatus 41, the process proceeds to Step S104. In the meanwhile, when the ground wireless apparatus 1 is in communication with the on-vehicle wireless apparatus 41, the process proceeds to Step S105.

In Step S104, the ground wireless apparatus 1 suspends the operations of the transmitter 111 and the receiver 112. Specifically, the power source controller 113 performs control of suspending the power source of the transmitter 111 and the receiver 112.

In Step S105, the ground wireless apparatus 1 continues the operations of the transmitter 111 and the receiver 112. Specifically, when the transmitter 111 and the receiver 112 are in operation, the power source controller 113 performs control of continuously supplying the electrical power to the transmitter 111 and the receiver 112. When the transmitter 111 and the receiver are suspended, the power source controller 113 performs control of supplying the electrical power to activate the transmitter 111 and the receiver 112.

As described above, according to the present Embodiment 1, the ground wireless apparatus 1 suspends the operations of the transmitter 111 and the receiver 112 when the handover destination list does not include the own station, thus can suppress the electrical power consumed in the transmitter 111 and the receiver 112.

The same applies to the other ground wireless apparatuses 2 and 3. The electrical power consumption of the ground wireless apparatuses 1, 2, and 3 can be suppressed compared with a case where the operation of the transmitter is suspended as is conventionally done, thus an electrical power consumption of a whole train control system can be suppressed.

### Embodiment 2

Described in the Embodiment 1 is a case where the ground wireless apparatus determines the power source control of the transmitter and the receiver. Described in the present Embodiment 2 is that a ground apparatus determines power source control of a transmitter and a receiver of a ground wireless apparatus.

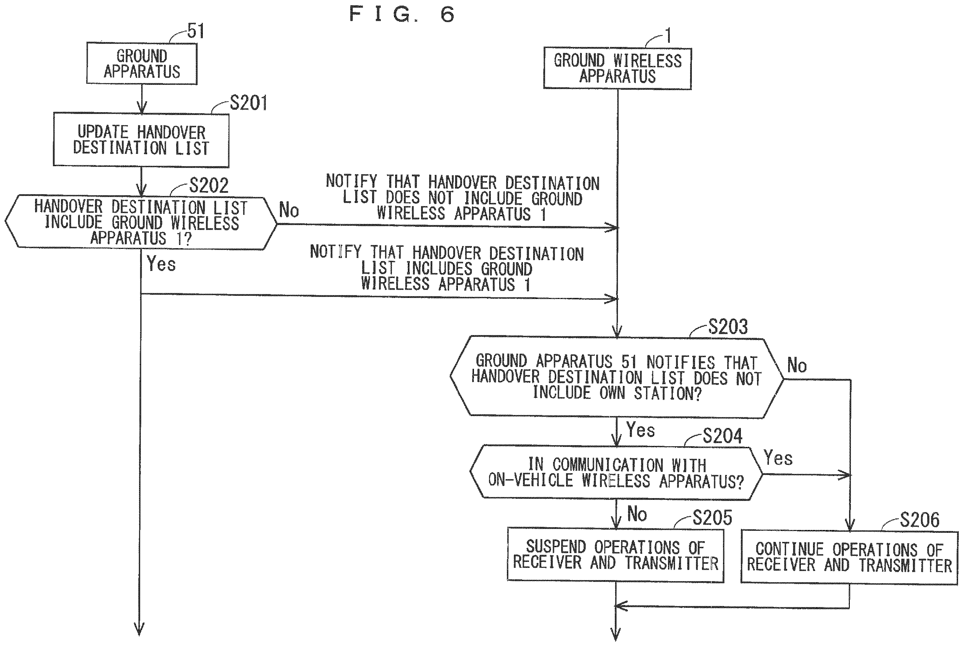

FIG. 6 is a flow chart illustrating an example of an operation of a train control system. FIG. 6 illustrates an operation between the ground apparatus 51 and the ground wireless apparatus 1, however, the same applies to the operation between the ground apparatus 51 and the other ground wireless apparatuses 2 and 3. Step S201 and Step S204 to Step S206 in FIG. 6 correspond to Step S101 and Step S103 to Step S105 in FIG. 5, thus the description is omitted herein. Step S202 and Step S203 are described hereinafter.

In Step S202, the ground apparatus 51 determines whether or not the handover destination list includes the ground wireless apparatus 1. When there is a handover destination list corresponding to a plurality of on-vehicle wireless apparatuses, the ground apparatus 51 determines whether or not all of the handover destination lists include the ground wireless apparatus 1.

When the handover destination list does not include the ground wireless apparatus 1, the ground apparatus 51 notifies the ground wireless apparatus 1 that the handover destination list does not include the ground wireless apparatus 1. In the meanwhile, when the handover destination list includes the ground wireless apparatus 1, the ground apparatus 51 notifies the ground wireless apparatus 1 that the handover destination list includes the ground wireless apparatus 1.

In Step S203, the ground wireless apparatus 1 determines whether or not the ground apparatus 51 has notified that the handover destination list does not include the own station. When the ground apparatus 51 has notified that the handover destination list does not include the own station, the process proceeds to Step S204.

In the meanwhile, when the ground apparatus 51 has not notified that the handover destination list does not include the own station, the process proceeds to Step S206. Herein, the case where the ground apparatus 51 has not notified that the handover destination list does not include the own station includes a case where the ground apparatus 51 has notified that the handover destination list includes the own station.

Described in FIG. 6 is the case where the ground apparatus 51 notifies the ground wireless apparatus 1 that the handover destination list includes the ground wireless apparatus 1 or the handover destination list does not include the ground wireless apparatus 1, however, the configuration is not limited thereto.

For example, when the handover destination list includes the ground wireless apparatus 1, the ground apparatus 51 may notify the ground wireless apparatus 1 that the operations of the transmitter 111 and the receiver 112 of the ground wireless apparatus 1 are suspended.

As described above, according to the present Embodiment 2, the electrical power consumption of the ground wireless apparatuses 1, 2, and 3 can be suppressed in the manner similar to the Embodiment 1, thus an electrical power consumption of a whole train control system can be suppressed. The ground apparatus 51 notifies the ground wireless apparatus 1 of only information whether or not the transmitter 111 and the receiver 112 are suspended, and the handover destination list is not transmitted as the Embodiment 1.

Accordingly, a data amount of data transmitted from the ground apparatus 51 to the ground wireless apparatus 1 can be reduced. Furthermore, there is no need to determine whether or not the handover destination list includes the own station in the ground wireless apparatus 1 as with the Embodiment 1, thus a calculation amount in the ground wireless apparatus 1 can be reduced.

Each embodiment can be arbitrarily combined, or each embodiment can be appropriately varied or omitted within a scope of the present invention.

While the present invention has been described in detail, the foregoing description is in all aspects illustrative and not restrictive. It is therefore understood that numerous modification examples not exemplified above can be devised.

### Explanation of Reference Signs

- 1, 2, 3: ground wireless apparatus
- 4: vehicle
- 5: apparatus room
- 6: vehicle
- 71, 72, 73, 74, 75, 76: ground wireless apparatus
- 11,21,31: wireless unit
- 12, 22, 32: L2 switch
- 13, 23, 33: power source
- 41: on-vehicle wireless apparatus
- 51: ground apparatus
- 52: L2 switch
- 53: UPS
- 61: on-vehicle wireless apparatus
- 111, 211, 311: transmitter
- 112, 212, 312: receiver
- 113,213,313: power source controller
- 114, 214, 314: SW
- 511: route recording unit
- 512: handover destination list calculation unit
- 513: handover destination list recording unit
- 514: transmission unit
- 515: reception unit.

## Claims

1. A train control system comprising:
- a ground wireless apparatus disposed along a railway line of a railway track;
- an on-vehicle wireless apparatus disposed in a train traveling along the railway track and connected to the ground wireless apparatus to achieve wireless communication; and
- a ground apparatus communicably connected to the ground wireless apparatus, wherein the ground apparatus calculates a handover destination list indicating whether or not the ground wireless apparatus is to be a connection destination for wireless communication with the on-vehicle wireless apparatus in a future based on route information and positional information of the train, and wherein the ground wireless apparatus suspends a power source of a transmitter and a receiver used for the wireless communication with the on-vehicle wireless apparatus when the handover destination list does not include the ground wireless apparatus.

2. The train control system according to claim 1,
wherein the ground apparatus transmits the handover destination list to the ground wireless apparatus, and
the ground wireless apparatus determines whether or not the handover destination list includes the ground wireless apparatus.

3. The train control system according to claim 1,
wherein the ground apparatus determines whether or not the handover destination list includes the ground wireless apparatus, and transmits a result of the determination to the ground wireless apparatus.

4. The train control system according to any one of claims 1 to 3,
wherein the train includes a plurality of trains, and
the ground apparatus calculates the handover destination list for the on-vehicle wireless apparatus disposed in each of the plurality of trains.
